# EUROPEAN PATENT SPECIFICATION

(11) **EP 2 108 685 B1**
(45) Date of publication and mention of the grant of the patent: **23.11.2016**
(21) Application number: 09004774.7
(22) Date of filing: 31.03.2009
(51) Int. Cl.: C09J 7/02, C09J 133/04

(54) **Pressure-sensitive adhesive sheet and production method thereof**
Druckempfindliches Klebeblatt und Herstellungsverfahren dafür
feuille adhésive sensible à la pression et son procédé de production

(30) Priority: 07.04.2008 JP 2008099170
(43) Date of publication of application: 14.10.2009
(73) Proprietor: Nitto Denko Corporation, Ibaraki-shi, Osaka 567-8680 (JP)
(72) Inventor: Yagura, Kazuyuki, Ibaraki-shi Osaka 567-8680 (JP); Naito, Tomonari, Ibaraki-shi Osaka 567-8680 (JP); Ikeya, Mami, Ibaraki-shi Osaka 567-8680 (JP); Takahashi, Akiko, Ibaraki-shi Osaka 567-8680 (JP)
(74) Representative: Grünecker Patent- und Rechtsanwälte PartG mbB

(56) References cited:
- EP-A- 1 498 462
- EP-A- 1 647 586
- DATABASE WPI Week 200257 Thomson Scientific, London, GB; AN 2002-531320 XP002540343 & JP 2002 069411 A (NITTO DENKO CORP) 8 March 2002 (2002-03-08)
- DATABASE WPI Week 200351 Thomson Scientific, London, GB; AN 2003-535586 XP002540344 & JP 2002 285137 A (ARAKAWA CHEM IND LTD) 3 October 2002 (2002-10-03)

## Description

### BACKGROUND OF THE INVENTION

### 1. Field of the Invention

The present invention relates to a pressure-sensitive adhesive (PSA) sheet. In particular, it relates to a PSA sheet with low toluene and total volatile organic compound (TVOC) emissions and further with reduced unpleasant odors.

This Application claims priority based on Japanese Patent Application No. 2008-099170 filed onApril 7, 2008 and the entire content of the application is incorporated herein by reference.

### 2. Description of the Related Art

Aqueous emulsion-type PSAs in which an acrylic polymer is dispersed in water are preferred as compared to solvent-type counterparts in view of environmental concerns. Aqueous emulsion-type acrylic PSA compositions have an advantage so as to allow efficient production of a PSA layer of a higher solvent-proof and a PSA sheet having the PSA layer.

On the other hand, recently, a desire for reducing the amounts of toluene and TVOCs released from PSA sheets has increased. Therefore, PSA sheets to meet this desire and PSA compositions to enable preparation of such PSA sheets are in demand. Examples of documents describing the related art include Japanese Patent Application Publication Nos. 2004-315767and 2006-111818.

### SUMMARY OF THE INVENTION

Even when mechanically-detected toluene and TVOC emissions are lower than prescribed maximum allowable levels in a PSA sheet, to what degree users feel unpleasant odors upon actual application of the PSA sheet in an indoor space may not be easily predicted from mechanically-detected values. Although unpleasant odors tend to decrease as the toluene and TVOC emissions are reduced, it is not necessarily realistic, in terms of the PSA sheet performance, productivity, substrate selection and so on, to minimize their amounts as close to zero as possible.

An objective of the present invention is to provide a PSA sheet provided with a PSA layer formed of an aqueous emulsion-type acrylic PSA composition, wherein the toluene and TVOC emissions are both low and further unpleasant odors felt by users are reduced. Another objective of the present invention is to provide an efficient production method for such PSA sheets. Another related objective is to provide a PSA composition desirable for preparing these PSA sheets and a method for producing the composition.

The present invention provides a PSA sheet comprising a PSA layer formed of a PSA composition comprising an aqueous emulsion of an acrylic polymer and an aqueous emulsion of a tackifier resin, meeting all of the following conditions:
(a) when heated at 80 °C for 30 minutes, toluene emission is at most 20 µg per 1 g of the sheet;
(b) when heated at 80°C for 30 minutes, TVOC emission is at most 150 µg per 1 g of the sheet;
(c) in a sensory test where a group of participants evaluate odor unpleasantness of a sample gas comprising 900 cm³ of air containing odorous substances released from a 10-cm² piece of the PSA sheet over 24 hours at a temperature of 23 °C and a relative humidity of 50% against a reference gas comprising the same volume of air containing 0.05 g of toluene, more than 90% of the participants find that the sample gas is less unpleasant than the reference gas.

This PSA sheet is prepared with an aqueous emulsion-type acrylic PSA composition and thus is environmentally preferred. It also can exhibit excellent adhesive performance because it is prepared with an acrylic PSA composition containing a tackifier resin emulsion. In addition to that the PSA sheet releases low levels of both toluene and TVOCs, it has an excellent quality such that the odor unpleasantness is found low in an actual sensory test.

In a preferred embodiment of the PSA sheet disclosed herein, the tackifier resin emulsion is an aqueous emulsion of a tackifier resin having a softening point of 120 °C or higher. Preferably, the tackifier resin emulsion is prepared with essentially no aromatic hydrocarbon solvents such as toluene. While using a tackifier resin with a high softening point is effective in increasing the PSA performance (for instance, heat resistance), emulsification of this is difficult (Japanese Patent Application Publication No. 2006-111818). By selecting an emulsion of a tackifier resin with a high softening point, which has been prepared essentially without at least aromatic hydrocarbon solvents (more preferably, essentially without no organic solvents), a PSA sheet with reduced toluene and TVOC emissions as well as reduced odor unpleasantness.

The present invention also provides a method for producing a PSA sheet disclosed herein. The method comprises subjecting a monomer material composed primarily of an alkyl (meth)acrylate to emulsion polymerization so as to prepare an aqueous emulsion of an acrylic polymer. It also comprises mixing the acrylic polymer emulsion and an aqueous tackifier resin emulsion to prepare a PSA composition. It further comprises drying the PSA composition to form a PSA layer.

The emulsion polymerization is carried out under the following conditions (A) and (B):
(A) the monomer material is added to a reaction vessel containing a first fraction of polymerization initiator to form a reaction mixture, the reaction mixture is maintained at a temperature above room temperature to effect the emulsion polymerization, and the reaction mixture is cooled from the polymerization temperature to room temperature; and
(B) a second fraction of polymerization initiator is supplied to the reaction mixture after a time interval from completion of the addition of the monomer material to the reaction vessel (typically before finishing the cooling).

It is noted that for the second fraction, can be preferably used a polymerization initiator having a half-life temperature that is lower than that of the first fraction and/or a redox initiator (for example, a combination of hydrogen peroxide and ascorbic acid).

This production method provides an acrylic polymer emulsion with a greatly reduced amount of remaining monomers. By using a PSA composition prepared by mixing this sort of an acrylic polymer emulsion and a tackifier resin emulsion (preferably, prepared with essentially no aromatic hydrocarbon solvents), can be efficiently produced a PSA sheet with reduced amounts of toluene and TVOC emissions as well as lowered odor unpleasantness. Therefore, as another aspect, the present invention provides a method for producing a PSA composition, comprising obtaining an aqueous acrylic polymer emulsion by subjecting a monomer material primarily composed of an alkyl (meth)acrylate to emulsion polymerization carried out under the conditions (A) and (B); and preparing a PSA composition by mixing the acrylic polymer emulsion and an aqueous tackifier resin emulsion.

In the production method for PSA sheet disclosed herein, because it uses an acrylic polymer emulsion with a greatly reduced amount of remaining monomers as described above, can be produced a PSA sheet with reduced toluene and TVOC emissions as well as lowered odor unpleasantness even by employing a relatively mild condition for drying of the PSA composition (for instance, by drying the PSA composition at a temperature of about 110°C or lower) The wider the selection of drying condition allowed for the PSA composition, the more desirable, because of one, two or more of the following views: that it enables reduction of energy cost required for drying the composition; that it provides more options for a substrate to which the composition is applied; that it forms a PSA layer of high performance by avoiding degraded adhesive performance due to excessive heating; and so on.

### BRIEF DESCRIPTION OF THE DRAWINGS

Figure 1 shows a cross section that schematically illustrates a configuration of the PSA sheet of this invention.
Figure 2 shows a cross section that schematically illustrates another configuration of the PSA sheet of this invention.
Figure 3 shows a cross section that schematically illustrates another configuration of the PSA sheet of this invention.
Figure 4 shows a cross section that schematically illustrates another configuration of the PSA sheet of this invention.
Figure 5 shows a cross section that schematically illustrates another configuration of the PSA sheet of this invention.
Figure 6 shows a cross section that schematically illustrates another configuration of the PSA sheet of this invention.

### DETAILED DESCRIPTION OF THE INVENTION

Hereinafter, preferred embodiments according to the present invention will be described. The matter which is other than that specifically referred to in this specification, but is necessary for carrying out the present invention, may be understood as a matter of design choice for those skilled in the art based on the conventional art. The present invention can be carried out based on the contents disclosed in this specification and the technological common knowledge in the art.

The PSA sheet of the present invention comprises a PSA layer formed of a PSA composition disclosed herein. It may be a PSA sheet with a substrate wherein a PSA layer is provided to one or both sides of a sheet substrate (support). Alternatively, it may be a substrate-less PSA sheet wherein a PSA layer is provided on a release liner (support). The concept of the PSA sheet herein encompasses so-called PSA tapes, PSA labels, PSA films and etc. The PSA layer is not limited to be continuous, but may be of a regular or random pattern of dots, stripes, and so on. The PSA sheet of the present invention may comprise, in addition to the PSA layer, a different layer (such as a middle layer, a primer layer, etc.) as long as the effects of the present invention are not degraded.

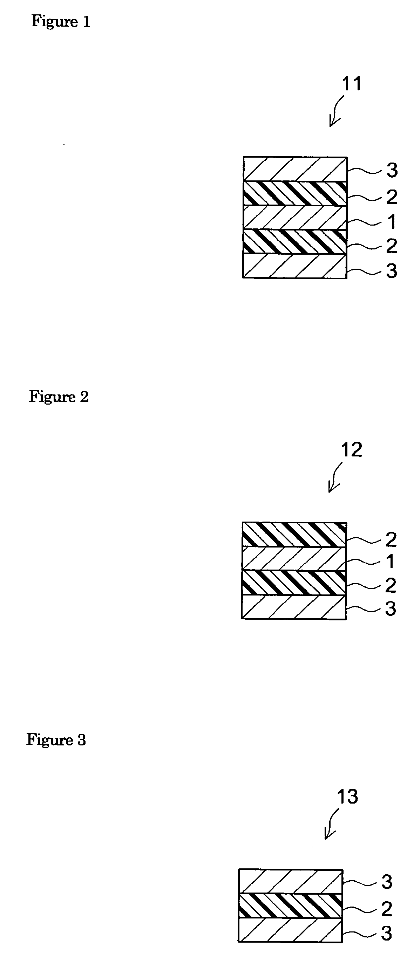

The PSA sheet disclosed herein may have a cross section such as those schematically illustrated in Figures 1 to 6. Of these, Figures 1 and 2 show an example of a configuration of a double-sided PSA sheet with a substrate. A PSA sheet 11 shown in Figure 1 has a configuration in which PSA layers 2 are provided on both sides of a substrate 1 and the PSA layers 2 are protected each by a release liner 3 releasable on at least a first face to be placed on the PSA layer. A PSA sheet 12 shown in Figure 2 has a configuration in which PSA layers 2 are provided on both sides of a substrate 1 and a first PSA layer 2 is protected by a release liner 3 releasable on both faces. This sort of PSA sheet 12 can be rolled to bring a second PSA layer 2 to contact a back face of the release liner 3 so as to protect the second PSA layer with the same release liner 3.

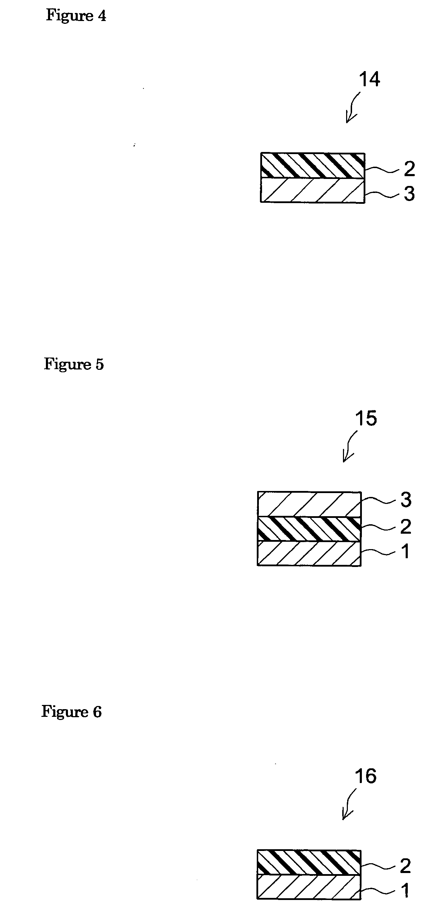

Figures 3 and 4 show an example of a configuration of a substrate-less PSA sheet. A PSA sheet 13 shown in Figure 3 has a configuration in which each side of a substrate-less PSA layer 2 is protected by a release liner 3 releasable on at least a first face to be placed on the PSA layer. A PSA sheet 14 shown in Figure 4 has a configuration in which a first side of a substrate-less PSA layer 2 is protected by a release liner 3 releasable on both faces. By rolling this up, a second side of the PSA layer 2 comes in contact with the back side of the release liner 3 so that the second side is also protected by the same release liner 3. As described above, in the substrate-less PSA sheets 13 and 14, the release liner 3 functions to protect the PSA layer 2 and also to support the PSA layer 2.

Figures 5 and 6 show an example of a configuration of a single-sided PSA sheet with a substrate. A PSA sheet 15 shown in Figure 5 has a configuration in which a PSA layer 2 is provided on a first side of a substrate 1 and a surface (adhesive face) of the PSA layer 2 is protected by a release liner 3 releasable on at least a first face to be placed on the PSA layer. A PSA sheet 16 shown in Figure 6 has a configuration in which a PSA layer 2 is provided on a first side of a substrate 1. A second side of the substrate 1 is releasable and thus by rolling up the PSA sheet 16, the PSA layer 2 comes in contact with a second side of the substrate 1 so that a surface (adhesive face) of the PSA layer 2 is protected by the second side of the substrate 1.

The PSA sheet of the present invention is such that the amount of toluene emission when heated at 80 °C for 30 minutes (hereinafter, sometimes referred to simply as the "toluene emission") is at most 20 µg per 1 g of the PSA sheet (hereinafter, it may be denoted as "20 µg/g"). In a preferred embodiment, the toluene emission is at most 10 µg/g, and more preferably 5 µg/g or less. The lower limit of toluene emission is not particularly defined, but in terms of the adhesive performance, productivity, types of suitable substrate and temporary substrate paper (a support to temporarily retain a PSA composition or PSA layer during the process of PSA sheet production, but not to be included in a PSA sheet as the final product), condition for drying the PSA composition and so on, it is usually 0.5 µg/g or greater and typically at least 1 µg/g.

The toluene emission is determined by the toluene emission measurement method described below.

### Method for measuring the toluene emission

A sample is prepared by cutting out a piece in a prescribed size (area: 5 cm²) from each PSA sheet. The sample is placed in a vial and the vial is tightly closed. Subsequently, the vial containing the sample is heated at 80°C for 30 minutes and 1.0 mL of the heated gas is injected by a headspace autosampler into a gas chromatography analyzer (GC analyzer) to measure the amount of toluene emission and determine the toluene content (emission) per 1 g of sample (PSA sheet) in µg/g.

Here, the mass of the PSA sheet used for the determination of the toluene content per 1 g of PSA sheet corresponds to, in the case of a PSA sheet with a substrate, the entire mass including the substrate and the PSA layer supported by it (but, excluding the release liner); and, in the case of a substrate-less PSA sheet, the mass of the PSA layer itself.

The PSA sheet of the present invention is such that the amount of TVOC emission when heated at 80 °C for 30 minutes (hereinafter, sometimes referred to simply as the "TVOC emission") is at most 150 µg per 1 g of the PSA sheet. In a preferred embodiment, the TVOC emission is at most 100 µg/g and more preferably 50 µg/g or less. The lower limit of TVOC emission is not particularly defined, but in terms of the adhesive performance, productivity, types of suitable substrate and temporary substrate paper, conditions for drying the PSA composition and so on, it is usually 5 µg/g or greater and typically at least 10 µg/g.

The TVOC emission is determined by the TVOC emission measurement method described below.

### Method for measuring the TVOC emission

A vial containing a sample prepared in the same manner as in the toluene emission measurement is heated at 80 °C for 30 minutes and 1.0 mL of the heated gas is injected by headspace autosampler into GC analyzer. From the obtained gas chromatogram, each peak is assigned based on the internal standard to a volatile substance probable from the starting materials used in preparing the PSA composition (any remaining monomer, the solvent contained in tackifier resin emulsion, etc.) and quantified; and other peaks (unidentified peaks) are quantified as toluene to determine the TVOC emission in µg/g per 1 g of the sample (PSA sheet).

Here, the mass of the PSA sheet used for the determination of the TVOC emission per 1 g of PSA sheet corresponds to, in the case of a PSA sheet with a substrate, the entire mass including the substrate and the PSA layer supported by it (but, excluding the release liner); and, in the case of a substrate-less PSA sheet, the mass of the PSA layer itself

The conditions employed for the measurements of both the toluene emission and TVOC emission are as follows:
Column: DB-FFAP 1.0 µm (0.535 mm ø x 30 m)
Carrier gas: He 5.0 mL/min
Column head pressure: 23 kPa (40 °C)
Injector: split (split ratio of 12:1, temperature at 250 °C)
Column temperature: 40 °C (0 min)-<+10 °C/min>-250 °C (9 min) (that is, the temperature is increased from 40 °C to 250 °C at a rate of 10 °C/min and is maintained at 250 °C for 9 minutes.)
Detector: FID (temperature at 250 °C)

Moreover, the PSA sheet of the present invention is such that users actually feel less (weaker) unpleasant odors. In particular, in a sensory evaluation (odor unpleasantness test) carried out by the procedures described below, more than 90% of participants find the odors less unpleasant as compared to a reference gas.

### Method for evaluating unpleasant odors

Test environment: indoor space maintained at a temperature of 23 ± 2 °C and a relative humidity of 50 ± 5%.

Test sample: a piece of each PSA sheet cut out in a prescribed size (10 cm²).
Sample container: a new glass container with a volume of 900 cm³ (0.9 L) prewashed with distilled water followed by acetone and pre-dried at 80 °C for 12 hours
Gas sample: at least five samples (sample gas containers) prepared such that a test sample is adhered on its first face to an inner surface of a sample container; and the container is closed and stored in the above test environment for 24 hours.
Reference gas: the same number of samples (reference gas containers) as the gas samples prepared such that 0.05 g of toluene is placed in a sample container; and the container is closed and stored in the above test environment for 24 hours.
Participants: at least 10 people to evaluate the odors
Evaluation procedures: each participant smells the odors from a sample gas container and a reference gas container by opening their lids for a brief time and records which of the two has less unpleasant odors. Each container is evaluated by no more than two participants. That is, each container would not be evaluated again after its lid has been opened twice.

In a desirable embodiment of the PSA sheet disclosed herein, the formaldehyde emission is less than 3 µg/m³ (more preferably 2 µg/m³ or less, and even more preferably 1 µg/m³). Here, the formaldehyde emission is determined by procedures according to JIS A 1901(2003). The surface area of each test sample is 0.043 m² and the formaldehyde content per a unit volume of the sample (PSA sheet) is determined in µg/m³.

### Method for measuring the formaldehyde emission

### Sampling conditions:

Collection tube: SEP-PAK DNPH Silica cartridge, short type, available from Nihon Waters KK.
Flow rate: 167 mL/min
Collected volume: 10 L

### Detectors and other conditions:

Small chamber: product name "20 L Chamber" available from ADTEC Corporation Fresh air supply system: product name "ADclean" available from Shinbishi Eco Business Corporation
Seal or sealed box: none
Temperature and humidity control system: product name "ADPAC-SYSTEM III" available from ADTEC.
Air sampling pump: product name "SP208-1000DUAL" sampling pump available from GL Sciences

### Analytical conditions:

High performance liquid chromatograph: product name "TM996PAD" available from Waters.
Detector: UV Detector
Column: product name "Puresil C18 (4.6 x 150 mm)" available from Waters. Mobile phase: aqueous acetonitrile solution (acetonitrile:water = 50:50)
Injection volume: 20 µL
Wavelength: 360 nm

The tackifier resin used in the technology disclosed herein is typically an aqueous emulsion-type tackifier resin composition (tackifier resin emulsion) in which a tackifier is dispersed in water. Though the dispersed tackifier is not particularly limited, examples include tackifier resins such as rosin-based, terpene-based, hydrocarbon-based, epoxy-based, polyamide-based, elastomer-based, phenol-based, ketone-based and the like. These tacldfier resins can be used solely or in combination of two or more kinds.

In particular, examples of rosin-based tackifiers include unmodified rosins (raw rosins) such as gum rosin, wood rosin and tall-oil rosin; modified rosins obtained by subjecting the unmodified rosins to hydrogenation, disproportionation, polymerization and so on (hydrogenated rosins, disproportioned rosins, polymerized rosins, other chemically-modified rosins and the like); and other various rosin derivatives. Examples of the rosin derivatives include rosin esters such as those obtained by esterifying unmodified rosins with alcohol (i.e., esterified rosins), those obtained by esterifying modified rosins (hydrogenated rosins, disproportioned rosins, polymerized rosins and the like) with alcohol (i.e., esterified modified rosins), and the like; unsaturated fatty acid-modified rosins obtained by modifying unmodified or modified rosins (hydrogenated rosins, disproportioned rosins, polymerized rosins and the like) with unsaturated fatty acid; unsaturated fatty acid-modified rosins esters obtained by modifying rosin esters with unsaturated fatty acid; rosin alcohols obtained by reducing the carboxyl group in unmodified rosins, modified rosins (hydrogenated rosins, disproportioned rosins, polymerized rosins and the like), unsaturated fatty acid-modified rosins and unsaturated fatty acid-modified rosin esters; metal salts of rosins such as unmodified rosins, modified rosins and various rosin derivatives (especially, rosin esters); phenolic rosins obtained by substitution of rosins (unmodified rosins, modified rosins, various rosin derivatives, etc.) with phenol by acid catalysis followed by thermal-polymerization; and the like.

Examples of terpene-based tackifier include terpene resins such as α-pinene polymers, β-pinene polymers, dipentene polymers and the like; modified terpene resins (such as terpene-phenol resins, styrene-modified terpene resins, terpene resins modified with aromatic compounds, hydrogenated terpene resins and the like) obtained by modification (modification with phenol, aromatic compounds, or hydrocarbons; hydrogenation; and so on) of terpene resins; and the like.

Examples of hydrocarbon-based tackifier include hydrocarbon resins such as aliphatic hydrocarbon resins, aromatic hydrocarbon resins, aliphatic cyclic hydrocarbon resins, aliphatic/aromatic petroleum resins (styrene-olefin co-polymers, etc.), aliphatic /alicyclic petroleum resins, hydrogenated hydrocarbon resins, coumarone resins, coumarone-indene resins and the like. Examples of aliphatic hydrocarbon resins include (co)polymers of one, two or more kinds of aliphatic hydrocarbons selected from olefins having about 4 to 5 carbons (1-butene, iso-butylene, 1-pentene, etc.) and dienes (butadiene, 1,3-pentadiene, isoprene). Examples of aromatic hydrocarbon resins include (co)polymers of one, two or more kinds selected from vinyl-group-containing aromatic hydrocarbons having about 8 to 10 carbons (styrene, vinyltoluene, α-methylstyrene, indene, methylindene, etc). Examples of aliphatic cyclic hydrocarbon resins include those obtained by cyclodimerization followed by polymerization of so-called C4 petroleum fractions or C5 petroleum fractions; polymers of cyclic dienes (cyclopentadiene, dicyclopentadiene, ethylidenenorbornene, dipenene, etc.) or hydrogenated products thereof alicyclic hydrocarbon resins obtained by hydrogenation of aromatic rings of aromatic hydrocarbon resins or aliphatic/aromatic petroleum resins; and the like.

Though not particularly limited to, but to lower the formaldehyde emission of the PSA sheet (for instance, to keep it below 3 µg/m³), a tackifier resin prepared without formaldehyde is preferably used. Examples of these tackifier resins include rosin-based, terpene-based, hydrocarbon-based, epoxy-based, polyamide-based, and elastomer-based tackifier resins; and the like.

In the technology disclosed herein, a preferred tackifier resin has a softening point (softening temperature) of about 120 °C or higher (preferably about 130 °C or higher, more preferably about 140 °C or higher). With a tackifier resin having a softening point in this range (typically, used as an emulsion thereon, can be obtained a PSA sheet of higher performance (for instance, showing one, two or more effects of excellent adhesiveness, edge peel resistance, heat resistance and the like). The upper limit of the softening point of tackifier resin is not particularly limited, but can be, for example, about 170 °C or lower (preferably about 160 °C or lower, more preferably about 155 °C or lower). The softening point of tackifier resin can be determined by determined by procedures according to JIS K 5601.

A preferred emulsion of tackifier resin is prepared with essentially no organic solvents or with a material (solvent) other than aromatic hydrocarbon-based organic solvents.

Preparation of an emulsion of tackifier resin with essentially no organic solvents (i.e., emulsification of a tackifier resin) can be carried out by solvent-free high-pressure emulsification, solvent-free phase-inversion emulsification and the like. Solvent-tree high-pressure emulsification can be carried out by melting a tackifier resin by heating it to a temperature above its softening point, adding water and an appropriate emulsifier thereto to premix, and emulsifying the resulting mixture by homogenizer. Solvent-free phase inversion emulsification can be carried out by tempering an emulsifier with a tackifier resin preheated to a temperature above its softening point under increased pressure or normal pressure, and emulsifying by inducing phase inversion with gradual addition of hot water.

To prepare an emulsion of tackifier resin with a solvent other than aromatic hydrocarbon-based organic solvents (i.e., a non-aromatic hydrocarbon-based organic solvent), for instance, a tackifier resin can be dissolved in a non-aromatic hydrocarbon-based organic solvent and the resulting solution can be dispersed in water. A suitable non-aromatic hydrocarbon-based organic solvent can be selected in accordance with the type of the tackifier resin. For example, an alicyclic hydrocarbon-based organic solvent can be used preferably. Examples of alicyclic hydrocarbon-based organic solvents include cyclohexanes such as cyclohexane, alkyl-group-containing cyclohexanes (methylcyclohexane, ethylcyclohexane, dimethylcyclohexane, methyethylcyclohexane, etc.) and the like; cyclopentane couterparts (cyclopentane, alkyl-group-containing cyclopentanes, etc.); cycloheptane couterparts (cycloheptane, alkyl-group-containing cycloheptanes, etc.); cyclooctane counterparts (cyclooctane, alkyl-group-containing cyclooctanes, etc.); and the like. These non-aromatic hydrocarbon-based organic solvents can be used solely or as a mixture of two or more kinds. The amount of the organic solvent is not particularly limited, but is preferably a smallest possible amount within a range that enables formation of a water dispersion of a solution containing a tackifier resin in the organic solvent (an emulsifier can be used as necessary). It is desirable to remove the organic solvents as much as possible by a known or conventional way (for instance, under reduced pressure) after the emulsification by dispersing the tackifier resin solution in water.

An emulsifier can be used as necessary for dispersing a tackifier resin in water. As for the emulsifier, one, two or more can be selected, for example, from the emulsifiers described later for use in emulsion-polymerization of a monomer material. An anionic emulsifier and/or nonionic emulsifier is preferably used. The emulsifier used in the emulsion-polymerization of monomer material may be the same with or different from the emulsifier used for preparation of the tackifier resin emulsion. Usually, when one of them is an anionic emulsifier, the other is preferred to be anionic as well; and when one of them is a nonionic emulsifier, the other is preferred to be nonionic as well. The amount of emulsifier used is not particularly limited as long as it enables emulsification of tackifier resin. For instance, the amount can be selected from a range of about 0.2 to 10 mass% (preferably about 0.5 to 5 mass%) with respect to the total amount of tackifier resin (solid content).

Examples of the tackifier resin emulsion that can be used preferably in the technology disclosed herein include product name "SK-253NS" (Harima Chemicals, Inc.; softening point 145 °C; a tackifier-containing emulsion produced using essentially no organic solvents), product name "Tamanor E-200-NT" (Arakawa Chemical Industries, Ltd.; softening point 150 °C; a tackifier-containing emulsion produced using an alicyclic hydrocarbon-based organic solvent), and the like

The acrylic polymer used in the technology disclosed herein is such that it makes up a base polymer (basic component) of PSA and is a polymer obtained by polymerization (typically by emulsion polymerization) of a prescribed monomer material. The monomer material is composed primarily of an alkyl (meth)acrylate, ie., (meth)acrylic ester of an alkyl alcohol (as a primary monomer). The term "(meth)acrylic acid" encompasses acrylic acid and methacrylic acid. When the monomer material is composed primarily of an alkyl(meth)acrylate, the alkyl (meth)acrylate content (when two or more different alkyl (meth)acrylates are contained, their total content) exceeds 50 mass% of the total monomer material. The alkyl (meth)acrylate content may be, for instance, more than 50 mass% up to 99.8 mass%. The alkyl (meth)acrylate content of monomer material is preferably at least about 80 mass% (typically about 80 to 99.8 mass%) and more preferably about 85 mass% or more (typically about 85 to 99.5 mass%). The alkyl (meth)acrylate content of monomer material may be about 90 mass% or more (typically about 90 to 99 mass%). This ratio approximately corresponds to the (co)polymerization ratio of the alkyl (meth)acrylate to the acrylic polymer obtained by polymerization of the monomer material.

The alkyl (meth)acrylate composing the monomer material may be one, two or more kinds selected from compounds represented by the following formula (1):

CH₂=C(R¹)COOR² (1)

wherein R¹ is a hydrogen atom or methyl group and R² is an alkyl group with 1 to 20 carbon atoms. Examples of R² include methyl, ethyl, propyl, iso-propyl, butyl, iso-butyl, s-butyl, t-butyl, pentyl, iso-amyl, neo-pentyl, hexyl, heptyl, octyl, iso-octyl, 2-ethylhexyl, nonyl, iso-nonyl, decyl, iso-decyl, undecyl, dodecyl, tridecyl, tetradecyl, pentadecyl, hexadecyl, heptadecyl, octadecyl, nonadecyl, eicosyl groups and the like. Of these, alkyl groups with 2 to 14 carbon atoms (hereinafter, a range of the number of carbon atoms like this is denoted such as "C₂₋₁₄") are preferred and C₂-₁₀ alkyl groups (for instance, butyl group, 2-ethylhexyl group and so on) are more preferred.

In a preferred embodiment, of the total alkyl (meth)acrylate content of the monomer material, at least about 80 mass% (more preferably at least about 90 mass%) is (meth)acrylic acid ester of an alkyl alcohol represented by the above formula (1) wherein R² is C₂-₁₀ (with C₄₋₈ more preferred). Essentially all of the alkyl (meth)acrylate contained in the monomer material can be a C₂-₁₀ alkyl (more preferably a C₄-₈ alkyl) (meth)acrylate. These alkyl (meth)acrylates can be used solely or in combination of two or more kinds. For example, the monomer material may have a composition containing, as the alkyl (meth)acrylate, butyl acrylate (BA) alone, 2-ethylhexyl acrylate (2EHA) alone, or both BA and 2EHA etc. When the monomer material contain BA and/or 2EHA as the alkyl (meth)acrylate, the content ratio (mass ratio) of BA to 2EHA (BA:2EHA) is in a range of about 0:100 to 100:0 (preferably 0:100 to 70:30, more preferably 5:95 to 60:40)

The monomer material may contain, in addition to the alkyl (meth)acrylate as the primary monomer, other monomers (copolymerizable components) as optional components. The other monomers may be one, two or more kinds selected from various monomers polymerizable with the alkyl (meth)acrylate used here. Other monomers can be used so as to introduce crosslinking points to the acrylic polymer, to increase the cohesive property of the acrylic polymer, and so on. The alkyl (meth)acrylate content of the total monomers forming the acrylic polymer is preferably about 80 mass% or more (for instance, about 80 to 99.8 mass%), more preferably about 85 mass% or more (for instance, 85 to 99.5 mass%), and even more preferably about 90 mass% or more (for instance about 90 to 99 mass%).

In particular, to introduce a crosslinking site to the acrylic polymer, a functional-group-containing monomer (especially, a thermally-crosslinkable functional group containing monomer to introduce a thermally-crosslinkable site to the acrylic polymer) can be used as a copolymerizable component. This sort of a functional-group-containing monomer brings about an increase of the adhesiveness to an adherend. The functional-group-containing monomer is not particularly limited as long as it is copolymerizable with alkyl (meth)acrylate and contains a functional group that can be a crosslinking site (typically such as an ethylenic unsaturated monomer). Examples include carboxyl-group-containing monomers such as (meth)acrylic acid, itaconic acid, crotonic acid, maleic acid, fumaric acid, isocrotonic acid and the like, or anhydrides thereof (maleic acid anhydride, itaconic acid anhydride and the like); hydroxyl-group-containing monomers such as vinyl alcohol, allyl alcohol and the like as well as hydroxyalkyl (meth)acrylates such as 2-hydroxyethyl (meth)acrylate, 2-hydroxypropyl (meth)acrylate, 2-hydroxybutyl (meth)acrylate and the like; amide-group-containing monomers such as (meth)acrylamide, N,N-dimethyl (meth)acrylamide, N-butyl (meth)acrylamide, N-methylol (meth)acrylamide, N-methylolpropane (meth)acrylamide, N-methoxymethyl (meth)acrylamide, N-butoxymethyl (meth)acrylamide and the like; amino-group-containing monomers such as aminoethyl (meth)acrylate, N,N-dimethylaminoethyl (meth)acrylate, t-butylaminoethyl (meth)acrylate and the like; epoxy-group-containing monomers such as glycidyl (meth)acrylate, methylglycidyl (meth)acrylate and the like; cyano-group-containing monomers such as acrylonitrile, methacrylonitrile and the like; heterocyclic monomers (for instance, with nitrogen-containing rings) such as N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-vinylmorpholine, N-vinylcaprolactam, N-(meth)acryloylmorpholine and the like; and so on.

These functional-group-containing monomers can be used solely or in combination of two or more kinds. Examples of preferred functional-group-containing monomers are carboxyl-group-containing monomers and anhydrides thereof (with ethylenic unsaturated monocarboxylic acids more preferred). Of these, acrylic acid and/or methacrylic acid are preferably used.

When the monomer material contains a functional-group-containing monomer such as these, the functional-group-containing monomer can be contained in an amount (when two or more kinds are contained, their total amount) of about 12 parts by mass or less (typically, about 0.5 to 12 parts by mass) for 100 parts by mass of alkyl (meth)acrylate. It can be about 8 parts by mass or less (typically about 1 to 8 parts by mass) for 100 parts by mass of alkyl (meth)acrylate.

In order to increase the cohesiveness of the acrylic polymer, a co-monomer other than the functional-group-containing monomer can be used. Examples of this co-monomer include vinyl esters such as vinyl acetate and vinyl propionate; styrene-based monomers such as styrene, substituted styrene (α-methylstyrene, etc.), and vinyltoluene; non-aromatic ring-containing (meth)acrylates including cycloalkyl (meth)acrylates such as cyclohexyl (meth)acrylate, cyclopentyl di(meth)acrylate, etc., and isobornyl (meth)acrylate; aromatic ring-containing (meth)acrylates including aryl (meth)acrylate such as phenyl(meth)acrylate, etc., aryloxyalkyl (meth)acrylate such as phenoxyethyl (meth)acrylate, etc., and aryl alkyl (meth)acrylates such as benzyl(meth)acrylate; olefinic monomers such as ethylene, propylene, isoprene, butadiene, and isobutylene; vinyl chloride and vinylidene chloride; isocyanate group-containing monomers such as 2-(meth)acryloyloxyethyl isocyanate; alkoxy group-containing monomers such as methoxyethyl (meth)acrylate and ethoxyethyl (meth)acrylate; vinyl ethers such as methyl vinyl ether and ethyl vinyl ether; and also polyfunctional monomers such as 1,6-hexanediol di(meth)acrylate, ethylene glycol di(meth)acrylate, diethylene glycol di(meth)acrylate, triethylene glycol di(meth)acrylate, tetraethylene glycol di(meth)acrylate, polyethylene glycol di(meth)acrylate, propylene glycol di(meth)acrylate, polypropylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa(meth)acrylate, glycerin di(meth)acrylate, epoxy acrylate, polyester acrylate, urethane acrylate, divinylbenzene, butyl di(meth)acrylate, and hexyl di(meth)acrylate; and the like.

The aqueous emulsion of acrylic polymer in the technology disclosed herein can be obtained by subjecting the monomer material to emulsion polymerization. The emulsion polymerization can be carried out in the same way as known general emulsion polymerization without particular limitations and for instance, various conventional procedures for supplying monomers, polymerization conditions (temperature, reaction time, applied pressure, etc.), and additives (polymerization initiator, surfactant, etc.) can be appropriately applied. For example, as for the procedures to supply monomers, the monomer material can be added to a polymerization vessel in one portion, gradually, or in separate portions. Part or all of the monomer material can be pre-mixed with water and the resulting emulsion (i.e., an emulsion of the monomer material) can be added to a reaction vessel. The reaction temperature can be appropriately selected in accordance with the types of the monomers and polymerization initiator. For instance, it can be selected from a range of 100 °C or lower (typically 40 to 100 °C, for example, 40 to 80 °C)

The polymerization initiator to be used at the polymerization can be suitably selected from known or conventional polymerization initiators according to the kind and conditions of the polymerization process. Examples of the polymerization initiator include azo polymerization initiators such as 2,2'-azobisisobutyronitrile, 2,2'-azobis(2-methylpropionamidine) disulfate, 2,2'-azobis[N-(2-carboxyethyl)-2-methylpropionamidine] hydrate, 2,2'-azobis(2-amidinopropane)dihydrochloride, 2,2'-azobis[2-(5-methyl-2-imidazolin-2yl)propane) dihydrochloride, 2,2'-azobis(N,N'-dimethyleneisobutylamidine), 2,2'-azobis(4-methoxy-2,4-dimethylvaleronitrile), 2,2'-azobis(2,4-dimethylvaleronitrile), 2,2'-azobis(2-methylbutyronitrile), 1,1'-azobis(cyclohexane-l-carbonitrile), 2,2'-azobis(2,4,4-trimethylpentane), and dimethyl-2,2'-azobis(2-methylpropionate); persulfate salts such as potassium persulfate and ammonium persulfate; peroxide-based polymerization initiators such as benzoyl peroxide, t-butyl hydroperoxide, di-t-butyl peroxide, t-butyl peroxybenzoate, dicumyl peroxide, 1,1-bis(t-butylperoxy)-3,3,5-trimethylcyclohexane, 1,1-bis(t-butylperoxy)cyclododecane, and hydrogen peroxide; substituted ethane-based polymerization initiators such as phenyl-substituted ethane; aromatic carbonyl compounds; and redox initiators where peroxides and reducing agents are used in combination. The polymerization initiator may be used solely or in combination of two or more kinds.

The polymerization initiator can be used in a usual amount and can be, for example, in a range of about 0.005 to 1 part by mass relative to 100 parts by mass of the total monomer material.

A chain transfer agent (considered also as an adjuster of molecular weight or polymerization degree) can be used in the polymerization as necessary. As the chain transfer agent, a known or conventional chain transfer agent can be used and examples thereof include mercaptans such as dodecanethiol, lauryl mercaptan, glycidyl mercaptane, 2-mercaptoethanol, mercaptoacetic acid, 2-ethylhexyl thioglycolate, and 2,3-dimercapto-1-propanol; and also α-methylstyren dimer and the like. The chain transfer agent may be used solely or in combination of two or more kinds. The chain transfer agent can be used in a usual amount and can be, for example, in a range of about 0.001 to 0.5 part by mass relative to 100 parts by mass of the total monomer material.

In a preferred embodiment of emulsion polymerization of the monomer material disclosed herein, the monomer material is added to a reaction vessel containing a polymerization initiator (a first fraction) and polymerization of the monomer material is carried out by maintaining the system at a temperature above room temperature (preferably about 40 °C to 80 °C; for instance, about 50 °C to 70 °C). Subsequently, the content (reaction mixture) of the reaction vessel is cooled typically to room temperature. For instance, to a reaction vessel charged with all of the first polymerization initiator fraction, can be added the monomer material in one portion, gradually over a prescribed time period (gradual addition), or in separate portions at prescribed time intervals (for instance, every 5 to 60 minutes or so) (portionwise addition). When the monomer material is added gradually, the suitable time period is typically about 1 to 8 hours and preferably about 2 to 6 hours (for example, about 3 to 5 hours). When the monomer material is added portionwise, the total time to take for the addition of the first portion through the final portion is typically about 1 to 8 hours and preferably about 2 to 6 hours (for example, about 3 to 5 hours). Alternatively, to a reaction vessel charged with part of the polymerization initiator, at least a portion of the monomer material can be added to initiate the polymerization and the rest of the polymerization initiator can be added gradually over a prescribed time or in separate portions at predetermined intervals. Usually, the addition of the polymerization initiator is preferred to be completed before or at the same time as completion of the addition of the monomer material.

The polymerization time (the time to take for carrying out the polymerization of the monomer material; the time for the system to be kept at a polymerization temperature starting from the time at which the polymerization reaction is initiated) can be appropriately selected according to the kind of the polymerization initiator to be used, polymerization temperature, addition methods of the polymerization initiator and the monomer material. For example, the polymerization time can be about 2 to 12 hours, but in view of productivity, it is preferred to be typically about 4 to 8 hours. It is also preferred to keep (for so-called curing or aging) the content of the reaction vessel (reaction mixture) at the polymerization temperature over a predetermined time after completion of the addition of all the monomer material. The curing process can lower the amount of the monomers remaining in the reaction mixture and contribute to a decrease in the amounts of the TVOC emission and unpleasant odors of the resulting PSA sheet. The time for the curing process can be, for instance, about 30 minutes to 4 hours, but in view of productivity, it is preferred to be typically about 1 to 3 hours. The polymerization time here includes the curing time. Thus, when, for example, all of the monomer material is gradually added over 4 hours to a reaction vessel containing all of the first polymerization initiator fraction, the vessel being kept at a polymerization temperature, and after completion of the monomer material addition, the system is maintained at the polymerization temperature for 2 hours to cure the reaction mixture, the polymerization time is considered to be 6 hours. The polymerization temperature can be fixed over the entire polymerization time or varied at some time intervals. For instance, the monomer material can be added at a prescribed polymerization temperature and the curing process can be carried out at a higher temperature.

In the method disclosed herein, after a time interval from the completion of addition of the monomer material to a reaction vessel, a second fraction of polymerization initiator can be added to the content of the reaction vessel (reaction mixture). By supplying the second polymerization initiator fraction (hereinafter, sometimes referred to as "additional initiator"), the amount of remaining monomers in the reaction mixture can be decreased efficiently (typically, by promoting the polymerization of the remaining monomers). As a result, the TVOC emission and unpleasant odors of the PSA sheet can be decreased. The additional initiator can be the same with or different from the polymerization initiator of the first fraction (i.e., the polymerization initiator supplied to the reaction vessel prior to the completion of addition of the monomer material hereinafter sometimes referred to as "primary initiator"). As for the additional initiator to effectively decrease the amount of remaining monomers, can be used preferably a polymerization initiator (which can be selected from aw-based, persulfate-based, peroxide-based polymerization initiators and the like), that has a half-life temperature that is lower than that of the primary initiator (which can be selected from azo-based, persulfate-based, peroxide-based polymerization initiators and the like). A redox polymerization initiator can also be used preferably as the additional initiator. For instance, preferably used is a redox polymerization initiator such as a combination of a peroxide (hydrogen peroxide, etc.) and ascorbic acid, a combination of a peroxide (hydrogen peroxide, etc.) and an iron(II) salt, a combination of a persulfate salt (ammonium persulfate, etc.) and sodium bisulfite, and the like. Of these, since no undesired by-products are formed after the redox reaction, the combination of hydrogen peroxide and ascorbic acid (typically in a form of 1 to 35% aqueous hydrogen peroxide) is desirable. The amount of the additional initiator to be used is not particularly limited and can be selected, for instance, within a range of about 0.005 to 1 part by mass relative to 100 parts by mass of the monomer material.

A suitable timing to supply (add) the additional initiator to the reaction mixture varies depending on the kind of the additional initiator as well. It is preferred to be after a time interval (typically after about 10 minutes to 4 hours; for instance, about 1 hour to 3 hours) from the completion of addition of the monomer material to a reaction vessel, but before the completion of cooling the reaction mixture. For example, when an additional initiator used is such that it decreases remaining monomers by forming a radical via thermal decomposition (such as azo-based, persulfate-based, peroxide-based initiators and the like), it is preferred to be supplied midway through the curing process (for instance, after about 30 to 95% of the time period for the curing process has passed). When a redox initiator is used, it is preferable to add the additional initiator around the completion of curing process (for instance, the additional initiator is added and immediately cooling is started), or midway through the cooling of the reaction mixture. In these embodiments, the amount of remaining monomers can be decreased while suppressing the influence on the productivity The additional initiator can be supplied in one portion, gradually, or in divided portions. Because of the simple operation, it is preferable that the additional initiator be added in one portion.

In the emulsion polymerization carried out as above, because the amount of remaining monomers can be effectively decreased by the additional initiator, an acrylic polymer emulsion with a sufficiently low amount of remaining monomers can be obtained without extending the polymerization time too much (for instance, the polymerization time can be about 8 hours or less). With a PSA composition obtained by mixing this sort of an acrylic polymer emulsion with a tackifier resin emulsion, can be formed a PSA sheet with low toluene and TVOC emissions and low unpleasant odors. That it does not require an extremely long polymerization time is preferred in view of increasing productivity of a PSA composition and a PSA sheet prepared therewith.

Details of the condition under which the emulsion polymerization is carried out to obtain an acrylic polymer emulsion used to form the PSA composition disclosed herein as well as the tackifier resin emulsion to be used can be selected so that the PSA sheet prepared with a PSA composition containing these emulsions meets the predetermined toluene and TVOC emission levels as well as the prescribed odor unpleasantness test level (typically so that it satisfies all of the afore-mentioned conditions (a) to (c)). That is, the invention disclosed in this application includes a PSA sheet production method comprising steps of preparing (selecting) an acrylic polymer emulsion that forms a PSA sheet to meet the prescribed conditions (a) to (c) and a tackifier resin emulsion; preparing an aqueous emulsion-type PSA composition using the acrylic polymer emulsion and the tackifier resin emulsion; and forming a PSA layer by drying the PSA composition. The step of preparing an acrylic polymer emulsion comprises selecting an appropriate condition for the emulsion polymerization to obtain the PSA sheet to meet the conditions (a) to (c) and carrying out the emulsion preparation of a monomer material under the selected condition.

The acrylic polymer emulsion contained in the PSA composition disclosed herein can be typically prepared by using a polymer (acrylic polymer) emulsion prepared by emulsion polymerization in the embodiment described above. The acrylic polymer emulsion may be prepared by dispersing in water using an emulsifier as necessary, an acrylic polymer obtained by a different method, other than the emulsion polymerization, such as solution polymerization, photopolymerization, bulk polymerization and the like. For carrying out the emulsion polymerization or dispersing the acrylic polymer in water, suitable emulsifiers can be used solely or in combination of two or more kinds

In particular, the emulsifier may be in any forms, but usually, anionic emulsifiers and/or nonionic emulsifiers can be suitably used. Examples of the anionic emulsifier include alkyl sulfate salts such as sodium lauryl sulfate, ammonium lauryl sulfate, potassium lauryl sulfate and the like; polyoxyethylene alkyl ether sulfate salts such as sodium polyoxyethylene lauryl ether sulfate and the like; polyoxyethylene alkylphenyl ether sulfate salts such as ammonium polyoxyethylene laurylphenyl ether sulfate, sodium polyoxyethylene laurylphenyl ether sulfate and the like; sulfonate salts such as sodium dodecylbenzenesulfonate and the like; sulfosuccinates such as disodium laurylsulfosuccinate, disodium lauryl polyoxyethylenesulfosuccinate and the like; and so on. Examples of the nonionic emulsifier include polyoxyethylene alkyl ethers such as polyoxyethylene lauryl ether and the like; polyoxyethylene alkylphenyl ether-s such as polyoxyethylene laurylphenyl ether and the like; polyoxyethylene fatty acid esters; polyoxyethylene-polyoxypropylene block polymers; and so on.

The amount of the emulsifier to be used is not particularly limited as far as an emulsion of the acrylic polymer can be prepared with it. For example, it can be selected from the range of about 0.2 to 10 mass%, preferably about 0.5 to 5 mass% based on the total amount of the acrylic polymer or monomer material.

The amount of tackifier (typically as an emulsion) to be contained in the PSA composition to be used for preparation of a PSA layer disclosed herein is not particularly limited and it can be appropriately selected according to the desired adhesive performance (adhesiveness, edge peel resistance, etc.). For instance, based on the mass of tackifier contained in the tackifier resin emulsion, about 10 to 100 parts by mass (preferably about 15 to 80 parts by mass; and more preferably about 20 to 60 parts by mass) can be used relative to 100 parts by mass of acrylic polymer. When the amount of tackifier is too low, the effects by the added tackifier will not be sufficient and the desired adhesive performance may not obtained. When the amount of tackifier is too high, its solubility with the acrylic polymer is likely to be insufficient and the adhesiveness and tack tend to be reduced. Also in view of the levels of toluene and TVOC emissions from the PSA sheet and the degree of odor unpleasantness, excessive use of tackifier should be avoided. For instance, the PSA composition preferably contains more than 50 mass% of acrylic polymer based on the non-volatiles contained therein (solid content).

A crosslinking agent may be added as necessary to the PSA composition. The type of the crosslinking agent is not particularly limited and an appropriate agent can be appropriately selected from known or conventional crosslinking agents (such as isocyanate-based, epoxide-based, oxazoline-based, aziridine-based, melamine-based, peroxide-based, urea-based, metal alkoxide-based, metal chelete-based, metal salt-based, carbodiimide-based, amine-based crosslinking agents, etc.). The crosslinking agent may be either oil-soluble or watersoluble. The crosslinking agent may be used solely or in combination of two or more kinds. The amount of the crosslinking agent to be used is not particularly limited. For instance, relative to 100 parts by mass of acrylic polymer, it can be within the range of about 10 parts by mass or less (for example, about 0.005 to 10 parts by mass; preferably about 0.01 to 5 parts by mass).

The PSA composition may contain as necessary an acid or a base (aqueous ammonia, etc.) for adjusting the pH, etc. Examples of other optional components to be contained in the composition include various additives commonly used in the field of aqueous PSA compositions, such as a viscosifier (thickner), leveling agent, release agent, plasticizer, softener, filler, colorant such as pigments and dyes, surfactant, antistatic agent, preservative, anti-aging agent, UV absorber, antioxidant, photo-stabilizer, and the like.

A typical configuration of the PSA sheet disclosed herein comprises a backing to support a PSA layer formed of the PSA composition described above. The backing may be a substrate or a release liner of the PSA sheet.

Examples of the substrate used to construct the PSA sheet (typically a sheet substrate) includes plastic films made of polyolefins (polyethylene, polypropylene, ethylene-propylene copolymers, etc.), polyesters (polyethylene terephthalate, etc.), vinyl chloride-based resins, vinyl acetate-based resins, polyimide-based resins, polyamide-based resins, fluorocarbon resins and cellophanes; papers such as Japanese papers, kraft paper, glassine paper, wood free paper, synthetic paper, top coat paper, etc.; fabrics such as pure or blended fabrics or nonwoven fabrics composed of semi-synthetic fibers, synthetic fibers, or natural fibers such as cotton, staple fiber, Manila hemp, pulp, rayon, acetate, polyester, polyvinyl alcohol, polyamide, and polyolefin fibers; rubber sheets composed of natural rubber, butyl-rubber, etc.; foam sheets composed of polyurethane, polychloroprene rubber, etc.; metal foils such as aluminum foil, copper foil, etc.; and composites thereof The plastic films may be any of non-stretched types or stretched types (uniaxially stretched types or biaxially stretched types). The substrate may be a single layer or laminated. The substrate may contain as necessary various additives such as lubricant, plasticizer, filler, colorant such as pigments and dyes, antistatic agent, antiaging agent, UV absorber, antioxidant and so on. The surface of the substrate (especially, the surface to retain a PSA layer) may be subjected to suitable a known or conventional surface treatment, for instance, a physical treatment such as corona discharge treatment or plasma treatment, a chemical treatment such as primer coating or backside treatment, or the like. The thickness of the substrate can be suitably selected according to the purpose. In general, it is about 10 µm to 500 µm (preferably about 10 µm to 200 µm)

The material and construction of the release liner to protect and/or support the release layer is not particularly limited and a suitable liner can be selected from various known release liners. For instance, a desired release liner is such that a substrate is release-treated on at least a first surface (typically, having a layer treated with a release agent). For the substrate (release treatment subject) to make up the release liner of this sort, a suitable substrate can be selected from the same substrate materials listed above for the substrate to construct the PSA sheet (various plastic films, papers, fabrics, rubber sheets, foam sheets, metal foils and composites thereof, etc.). For the release treatment, a known or conventional release agent (for instance, a silicone-based, fluorocarbon-based, or long-chain alkyl-based release agent).

Low-adhesive substrates composed of fluorocarbon polymers (e.g., polytetrafluoroethylene, polychlorotrifluoroethylene, polyvinyl fluoride, polyvinylidene fluoride, a tetrafluoroetylene-hexafluoropropylene copolymer, a chlorofluoroethylene-vinylidene fluoride copolymer, etc.) and low-adhesive substrates composed of low or nonpolar polymers (e.g., olefin-based resins such as polyethylene and polypropylene) can be also employed as the release liner without any release treatment on a surface. Alternatively, these low-adhesive substrates can be release-treated on a surface and used as the release liner. The material used to construct the release liner or the thickness of the release-treated layer is not particularly limited and can be appropriately selected according to the purpose. The total thickness of the release liner (in case of a release liner having a release-treated layer on a substrate surface, the total thickness including the substrate and the release-treated layer) is preferably about at least 15 µm (typically about 15 µm to 500 µm) and more preferably about 25 µm to 500 µm.

The PSA layer of the technology disclosed herein can be typically formed by applying to a prescribed surface (of substrate, release liner, temporary substrate paper, etc.) an aqueous emulsion-type acrylic PSA composition prepared by mixing at a prescribed ratio the above-mentioned components (various additives may be contained as necessary besides an acrylic polymer emulsion and a tackifier resin emulsion) and drying the composition. The PSA composition can be applied (typically by coating) with a conventional coater (for instance, gravure roll, reverse roll, kiss roll, dip roll, bar, knife, spray coaters, etc.). Though not particularly limited to, but the thickness of the PSA layer after drying (in case of a double-sided PSA sheet, the thickness of a single PSA layer formed on one surface of the substrate) can be selected within a range of 2 µm to 150 µm (preferably about 5 µm to 100 µm). The thickness of the PSA layer may be about 20 µm to 150 µm (typically about 40 µm to 100 µm. In case of a PSA sheet with a substrate, the PSA layer can be formed by directly applying a PSA composition to the substrate or transferring to the substrate a PSA layer formed on a release liner.

The drying of the PSA composition applied on a prescribed surface is preferred to be carried out with heating in terms of efficiency of the crosslinking reaction, productivity and so on. For the heating (drying), though it depends on the material of the substrate and the desired post-drying thickness of the PSA layer (thickness of the PSA composition ' coat), the temperature may be about 40 °C to 120 °C. The drying time can be for instance about 30 seconds to 5 minutes.

A desirable embodiment of the present invention provides a PSA sheet comprising a PSA layer obtained by carrying out the drying of the PSA composition at a temperature of 110 °C or lower (for example, about 60 °C to 110 °C and preferably about 80 °C to 110 °C), the sheet meeting all of the above-mentioned conditions (a) to (c) (which may be a double-sided PSA sheet comprising the PSA layers on both sides of a substrate of a non-woven fabric, etc.); and a production method thereof That the drying can be carried out at a relatively low temperature as above is desirable because it can prevent degradation of the adhesiveness due to an excessive heating and formation of a rough adhesive surface due to bubbling of the PSA composition (as a result, it enables preparation of a PSA sheet of greater adhesiveness) and because a suitable object (substrate, release liner, temporary substrate paper, etc.) for coating of the PSA composition can be selected from a wider variety of materials (for instance, a material of relatively poor heat-resistance can be selected).

A desirable embodiment of the present invention provides a PSA sheet comprising a PSA layer formed by carrying out the drying of the PSA composition for about 3 minutes or less (for example, about 1.5 minutes to 2.5 minutes), the sheet meeting all of the above-mentioned conditions (a) to (c). That the drying takes a relatively short time is preferred in view of increasing the production efficiency of the PSA sheet. It is preferred also in terms of preventing degradation of the adhesiveness due to heating for a excessive period of time (thus in terms that a PSA sheet of greater adhesiveness can be produced). For example, as compared to a PSA sheet comprising a PSA layer prepared by drying a PSA composition at 120 °C for 5 minutes, a PSA sheet comprising a PSA layer prepared by drying the same PSA composition at 110 °C for 2 minutes may show greater adhesive performance.

A desirable embodiment of the present invention provides a PSA sheet comprising a PSA layer prepared by drying a PSA composition at a relatively low temperature and/or for a relatively short time and having a post-drying thickness of about 40 µm or greater (typically about 40 µm to 100 µm; for instance about 50 µm to 70 µm) with the sheet meeting all of the above conditions (a) to (c); and a production method thereof By forming a relatively thick PSA layer by employing a relatively low drying temperature and/or a relatively short drying time, can be produced a PSA sheet of greater adhesive performance.

A suitable embodiment of polymerization of the acrylic polymer emulsion (for example, the type of the additional initiator and when to add it) and a suitable type of the tackifier resin emulsion to be used should be selected so as to form a PSA sheet according to these desirable embodiments.

A desirable embodiment of the present invention provides a PSA sheet (e.g., a double-sided PSA sheet) comprising 0.03 g to 1 g (typically 0.16 g to 1g; for instance, 0.5 g to 1 g or 0.8 to 1 g) of PSA per 1 g of PSA sheet with the sheet meeting all of the above conditions (a) to (c); and a production method thereof The technology disclosed herein brings about a PSA sheet that meets the predetermined desired properties (toluene emission, TVOC emission, odor unpleasantness) even when it contains a relatively large amount of PSA per a unit mass and/or unit area. This PSA sheet (for instance, a double-sided PSA sheet) meets an adhesive level characterized by a peel strength of at least about 10 N/20mm and an edge peel height (edge peel distance) of at most about 5 mm, which are determined by procedures described in the examples given below.

### EXAMPLES

Hereinafter, some examples according to the present invention will be described, but the present invention is not limited to these examples. In the following description, the "part(s)" and "%" are based on mass unless otherwise specified.

### Example 1

To a reaction vessel equipped with a condenser, nitrogen inlet, thermometer and stirrer, were placed 0.1 part 2,2'-awbis[N-(2-carboxyethyl)-2-methylpropionamidine] hydrate (polymerization initiator) (product name "VA-057" available from Wako Pure Chemical Industries, Ltd.) and 35 parts ion-exchanged water, and the reaction mixture was stirred for 1 hour under nitrogen flow with increasing the temperature to 60 °C. To the reaction mixture maintained at this polymerization temperature, was gradually added dropwise over 4 hours an emulsion (an emulsion of monomer material) prepared by adding 90 parts butyl acrylate, 10 parts 2-ethylhexyl acrylate, 4 parts acrylic acid, 0.05 part dodecanethiol (chain transfer agent) and 2 parts sodium polyoxyethylene lauryl sulfate (emulsifier) to 40 parts ion-exchanged water so as to effect the emulsion polymerization. After the completion of addition of the monomer material emulsion, the reaction mixture was maintained at the same temperature (here at 60 °C) for two additional hours for curing. After the completion of curing, 0.1 part ascorbic acid and 0.1 part 35% aqueous hydrogen peroxide (additional initiator) were added and the resulting mixture was cooled to room temperature.

10% aqueous ammonia was added to the reaction mixture to adjust the pH to 7. Subsequently, was added 0.7 part based on the solid content of an oxazoline-based crosslinking agent (product name "EPOCROS (trademark) WS-700" available from Nippon Shokubai Co., Ltd.; aqueous solution of an oxazoline-group-containing polymer) to obtain an aqueous dispersion (emulsion) of the acrylic polymer of Example 1.

The PSA composition of Example 1 was prepared by adding to 100 parts acrylic polymer contained in the acrylic polymer emulsion, 30 parts (solid content) of a tackifier resin emulsion. For the tackifier resin emulsion, was used product name "SK-253NS" (available from Harima Chemicals, Inc., aqueous emulsion of a polymerized rosin resin with a softening point of 145 °C). It is noted that "SK-253NS" is a tackifier resin emulsion prepared with essentially no organic solvents.

The PSA composition was coated to a release liner formed of a high-grade paper treated with a silicone release agent. The resultant was dried at 100 °C for 2 minutes to form a PSA layer of 60 µm thickness on the release liner. This PSA layer was adhered each side of a non-woven fabric substrate (product name "SP base paper-14" (available from Daifuku Paper M.F.G. Co., Ltd.; pulp-based non-woven fabric with a grammage of 14 g/m², thickness of 42 µm and a bulk density of 0.33 g/cm³) to obtain a PSA sheet (double-sided PSA sheet) of Example 1. Both of the adhesive surfaces of this double-sided PSA sheet are protected by the release liner used for the preparation of this PSA sheet.

### Example 2

In this example, to an acrylic polymer emulsion of Example 1, for 100 parts of the acrylic polymer contained therein, was added 30 parts (solid content) of product name "Tamanor E-200-NT" (Arakawa Chemical Industries, Ltd., aqueous emulsion of rosin phenol-based resin with a softening point of 150 °C) as the tackifier resin emulsion. Otherwise, a double-sided PSA sheet was prepared in the same way as Example 1. It is noted that "Tamanor E-200-NT" is a tackifier resin emulsion prepared with an alicyclic hydrocarbon-based organic solvent (that is, a non-aromatic hydrocarbon-based organic solvent).

### Example 3

In this example, for the monomer material emulsion, was used an emulsion obtained by adding 40 parts butyl acrylate, 60 parts 2-ethylhexylacrylate, 3 parts methyl acrylate, 3 parts acrylic acid, 0.06 part 3-methacryloxypropyl trimethoxysilane (product name "KBM-503" available from Shin-Etsu Chemical Co., Ltd.), 0.05 part dodecanethiol (chain transfer agent) and 2 parts sodium polyoxyethylene lauryl sulfate to 40 parts ion-exchanged water. No oxazoline-based crosslinking agent was used. Otherwise, an acrylic polymer emulsion of Example 3 was obtained in the same way as Example 1.

To this acrylic polymer emulsion, for 100 parts of the acrylic polymer contained therein, was added 30 parts (solid content) of product name "SK-253NS" to prepare a PSA composition of Example 3. With this composition, a double-sided PSA sheet was prepared in the same way as Example 1.

### Example 4

In this Example, a PSA composition was prepared in the same way as Example 1 except that no tackifier resin emulsion was added to the acrylic polymer emulsion. With this composition, a double-sided PSA sheet (i.e., a PSA sheet comprising a PSA layer containing no tackifier) was prepared in the same way as Example 1

### Example 5

In this example, for the monomer material emulsion, was used an emulsion obtained by adding 80 parts butyl acrylate, 20 parts 2-ethylhexyl acrylate, 3 parts methyl acrylate, 2 parts acrylic acid, 0.05 part dodecanethiol (chain transfer agent), and 2 parts sodium polyoxyethylene lauryl sulfate to 40 parts ion-exchanged water. To a reaction vessel equipped with a condenser, nitrogen inlet, thermometer and stirrer, were added 0.1 part 2,2'-azobis[2-(2-imidazoline-2-yl)]propane (polymerization initiator) (product name "VA-061" available from Wako Pure Chemical Industries, Ltd.) and 35 parts ion-exchanged water. The resulting mixture was stirred under nitrogen flow for one hour with increasing the temperature to 60 °C. While the polymerization temperature (here 60 °C) was maintained, was gradually added dropwise over 4 hours the monomer material emulsion to effect the emulsion polymerization. After the completion of addition of the monomer material emulsion, the reaction mixture was maintained at the same temperature (here 60 °C) for additional two hours for curing. After the completion of curing process, the system was cooled to room temperature without adding any additional initiator. Except that this mixture was used, a double-sided PSA sheet of Example 5 was prepared in the same way as Example 1 (i.e., by adding an oxazoline-based crosslinking agent and product name "SK-253NS" as a tackifier).

### Example 6

In this example, to an acrylic polymer emulsion of Example 1, for 100 parts of the acrylic polymer contained therein, was added 30 parts (solid content) of product name "Tamanor E-200" (Arakawa Chemical Industries, Ltd.; emulsion of a rosin phenol-based resin with a softening point of 150 °C). Otherwise, a double-sided PSA sheet of Example 6 was prepared in the same way as Example 1. It is noted that product name "Tamanor E-200" is a tackifier resin emulsion prepared with an aromatic hydrocarbon organic solvent.

For double-sided PSA sheets of Examples 1 to 6, toluene and TVOC emissions were measured. It is noted that 1 g of each double-sided PSA sheet of Examples 1 to 6 contains about 0.91 g of PSA

Double-sided PSA sheets of Examples 1 to 6 were evaluated for unpleasant odors as describe above. 10 people participated and for each of Examples 1 to 6, 5 sample gas containers and the same number of reference gas containers were prepared. It is noted that 10 cm² of each double-sided PSA sheet of Examples 1 to 6 contains about 1.6 g of PSA.

Double-sided PSA sheets of Examples 1 to 6 were evaluated for the adhesiveness and edge peel resistance by the procedures described below. Table 1 shows the results along with the components of the PSA compositions (presence/absence of additional initiator and product name of the tackifier supplied) used to prepare PSA sheets of the examples. The "odor reduction" in the table represents the number of participants who indicated that the sample gas smelled less unpleasant than the reference gas.

### Measurement of peel strength

A first release liner was removed from a first face of each double-sided PSA sheet to expose a first PSA layer, which was in turn backed with a piece of PET film having a thickness of 25 µm. A test piece of 20-mm width and 100-mm length was cut out of the backed PSA sheet. A second release liner was removed from a second face of the test piece and bonded to a SUS304 stainless steel plate adherend by pressing with a 2-kg roller back and forth once. This was stored at 23 °C for 30 minutes. According to JIS Z0237, the peel strength was measured in N/20mm-width at a temperature of 23 °C and a relative humidity of 50%, using a tensile tester with a pulling speed (peel speed) of 300 mm/min and a peel angle of 180°

### Edge peel test

A first release liner was removed from a first face of each double-sided PSA sheet to expose a first PSA layer. This was bonded to an aluminum plate of 0.5 mm thickness, 10 mm width and 90 mm length to prepare a test piece. The length of the test piece was curved along with a round bar of 50-mm diameter to form an arc. A second release liner was removed from a second face of the test piece, which was in turn bonded to a polypropylene plate using a laminator. This was stored at 23 °C for 24 hours. After heated at 70 °C for 2 hours, the height of the test piece edge lifted from the surface of the polypropylene plate was measured in mm.

**Table 1**

| Example | additional initiator | tackifier emulsion | toluene emission (µg/g) | TVOC emission (µg/g) | odor reduction (# of people) | peel strength (N/20mm | edge peel (mm) |
|---|---|---|---|---|---|---|---|
| 1 | yes | SK-253NS | 2 | 41 | 10 | 12 | 2 |
| 2 | yes | E-200-NT | 2 | 127 | 9 | 14 | 1 |
| 3 | yes | SK-253NS | 3 | 38 | 10 | 13 | 3 |
| 4 | yes | none | 2 | 36 | 10 | 6 | 8 |
| 5 | no | SK-253NS | 3 | 320 | 2 | 13 | 3 |
| 6 | yes | E-200 | 170 | 190 | 8 | 14 | 2 |

As shown in Table 1, with the PSA compositions of Examples 1 to 3, wherein the tackifier resin emulsions contained therein were prepared such that an additional initiator (here a redox polymerization initiator) was used during the preparation of the acrylic polymer emulsion and further the tackifier resin emulsions used had been produced with essentially no organic solvents or with a non-aromatic hydrocarbon solvent alone, despite of the mild drying condition of 2 minutes at 110 °C, were obtained PSA sheets that meet the conditions (a) to (c). In particular, were obtained PSA sheets having a toluene emission of at most 5 µg/g and a TVOC emission of at most 150 µg/g; and having passed the odor unpleasant test (that is, at least 90% of the participants evaluated that the sample gas smelled less unpleasant than the reference gas). These PSA sheets showed great adhesive properties as well. The TVOC emission of the PSA sheet of Example 2, though it was higher than those of Examples 1 and 3, was indeed lower than the predetermined maximum level Furthermore, in Example 2, while the odor unpleasantness actually smelled by the participants were as low as Examples 1 and 3, the adhesive properties were higher than those of Examples 1 and 3.

On the other hand, the PSA sheet of Example 4 prepared with a PSA composition containing no tackifier resin emulsion showed degraded adhesive properties. The PSA sheet of Example 5 formed of a PSA composition containing an acrylic polymer emulsion prepared without an additional initiator was evaluated to have a high degree of odor unpleasantness and its TVOC emission was also high. The PSA sheet of Example 6 formed of a PSA composition containing a tackifier resin emulsion prepared with an aromatic hydrocarbon solvent showed a clearly high toluene emission and its odor unpleasantness was relatively high as well.

As described above, the present invention provides a PSA sheet having toluene and TVOC emissions both lower than predetermined maximum levels and further having a low unpleasant odor level. This PSA sheet can be preferably produced by a production method disclosed herein. The PSA sheet of the present invention, taking advantage of these properties, can be preferably used for purposes where the sheet is used in an indoor space, for instance, for attaching vehicle (typically automobile) parts such as vehicle interiors or building part such as housing parts.

## Claims

1. A pressure-sensitive adhesive sheet comprising a pressure-sensitive adhesive layer formed of a pressure-sensitive adhesive composition containing an aqueous emulsion of an acrylic polymer and an aqueous emulsion of a tackifier resin, said aqueous emulsion of a tackifier resin being an aqueous emulsion of a tackifier resin having a softening point of 120 °C or higher and the emulsion is prepared with essentially no aromatic hydrocarbon solvents, said pressure-sensitive adhesive sheet meeting the following conditions (a) and (b):
(a) when heated at 80 °C for 30 minutes, toluene emission is at most 20 µg per 1 g of the sheet;
(b) when heated at 80 °C for 30 minutes, total volatile organic compound emission is at most 150 µg per 1 g of the sheet.

2. The pressure-sensitive adhesive sheet of claim 1, wherein the tackifier resin emulsion is prepared with essentially no organic solvents.

3. A method for producing the pressure-sensitive adhesive sheet of claim 1 or 2 comprising steps of:
subjecting a monomer material composed primarily of an alkyl (meth)acrylate to emulsion polymerization to prepare an aqueous emulsion of an acrylic polymer;
mixing the acrylic polymer emulsion and an aqueous emulsion of a tackifier resin, said aqueous emulsion of a tackifier resin being an aqueous emulsion of a tackifier resin having a softening point of 120 °C or higher and the emulsion is prepared with essentially no aromatic hydrocarbon solvents, to prepare a pressure-sensitive adhesive composition; and
drying the pressure-sensitive adhesive composition to form a pressure-sensitive adhesive layer;
wherein the emulsion polymerization is carried out under the following conditions:
the monomer material is added to a reaction vessel containing a first fraction of polymerization initiator to form a reaction mixture, the reaction mixture is maintained at a temperature above room temperature to effect the emulsion polymerization, and
a second fraction of polymerization initiator is supplied to the reaction mixture after a time interval (10 minutes to 4 hours) from completion of the addition of the monomer material to the reaction vessel.
and the reaction mixture is cooled from the polymerisation temperature to room temperature

4. The method of claim 3, wherein for the second fraction, a polymerization initiator having a half-life temperature lower than that of the polymerization initiator of the first fraction is used.

5. The method of claim 3, wherein a redox initiator is used for the second fraction.

6. The method of claim 5, wherein the redox initiator is a combination of hydrogen peroxide and ascorbic acid.

7. The method of any of claims 3 to 6, wherein the pressure-sensitive adhesive composition is dried at a temperature of 110 °C or lower.

## Patentansprüche

1. Druckempfindliches Klebeblatt umfassend eine druckempfindliche Klebeschicht, gebildet aus einer druckempfindlichen Klebstoffzusammensetzung, enthaltend eine wässrige Emulsion eines Acrylpolymers und eine wässrige Emulsion eines klebrigmachenden Harzes, wobei die wässrige Emulsion eines klebrigmachenden Harzes eine wässrige Emulsion eines klebrigmachenden Harzes mit einem Erweichungspunkt von 120°C oder höher ist und die Emulsion im Wesentlichen ohne aromatische Kohlenwasserstoff-Lösungsmittel hergestellt ist, wobei das druckempfindliche Klebeblatt die folgenden Bedingungen (a) und (b) erfüllt:
(a) wenn bei 80°C für 30 Minuten erhitzt, ist die Toluol-Emission höchstens 20 µg pro 1 g des Blattes;
(b) wenn bei 80°C für 30 Minuten erhitzt, beträgt die Gesamtemssion an flüchtiger organischer Verbindung höchstens 150 µg pro 1 g des Blattes.

2. Druckempfindliches Klebeblatt nach Anspruch 1, wobei die klebrigmachende Harz-Emulsion im Wesentlichen ohne organische Lösungsmittel hergestellt ist.

3. Verfahren zur Herstellung des druckempfindlichen Klebeblatts nach Anspruch 1 oder 2, umfassend die Schritte:
Unterwerfen eines Monomermaterials, das hauptsächlich aus einem Alkyl(meth)acrylat zusammengesetzt ist, einer Emulsionspolymerisation zur Herstellung einer wässrigen Emulsion eines Acrylpolymers;
Vermischen der Acrylpolymeremulsion und einer wässrigen Emulsion eines klebrigmachenden Harzes, wobei die wässrige Emulsion eines klebrigmachenden Harzes eine wässrige Emulsion eines klebrigmachenden Harzes mit einem Erweichungspunkt von 120°C oder höher ist und die Emulsion im Wesentlichen ohne aromatische Kohlenwasserstoff-Lösungsmittel hergestellt ist,
um eine druckempfindliche Klebstoffzusammensetzung herzustellen; und
Trocknen der druckempfindlichen Klebstoffzusammensetzung, um eine druckempfindliche Klebeschicht zu bilden;
wobei die Emulsionspolymerisation unter den folgenden Bedingungen durchgeführt wird:
das Monomermaterial wird einem Reaktionsgefäß zugegeben, das eine erste Fraktion an Polymerisationsinitiator enthält, um ein Reaktionsgemisch zu bilden, wobei das Reaktionsgemisch bei einer Temperatur oberhalb der Raumtemperatur gehalten wird, um die Emulsionspolymerisation zu bewirken, und die zweite Fraktion an Polymerisationsinitiator wird der Reaktionsmischung nach einem Zeitintervall (10 Minuten bis 4 Stunden) von Beendigung der Zugabe des Monomermaterials zu dem Reaktionsgefäß zugegeben und die Reaktionsmischung wird von der Polymerisationstemperatur auf Raumtemperatur abgekühlt.

4. Verfahren nach Anspruch 3, wobei für die zweite Fraktion ein Polymerisationsinitiator mit einer Halbwertzeittemperatur verwendet wird, die niedriger ist als die des Polymerisationsinitiators der ersten Fraktion.

5. Verfahren nach Anspruch 3, wobei ein Redox-Initiator für die zweite Fraktion verwendet wird.

6. Verfahren nach Anspruch 5, wobei der Redox-Initiator eine Kombination aus Wasserstoffperoxid und Ascorbinsäure ist.

7. Verfahren nach einem der Ansprüche 3 bis 6, wobei die druckempfindliche Klebstoffzusammensetzung bei einer Temperatur von 110°C oder niedriger getrocknet wird.

## Revendications

1. Feuille adhésive sensible à la pression comprenant une couche adhésive sensible à la pression formée à partir d'une composition adhésive sensible à la pression contenant une émulsion aqueuse de polymère acrylique et une émulsion aqueuse de résine adhésive, ladite émulsion aqueuse de résine adhésive étant une émulsion aqueuse d'une résine adhésive dont le point de ramollissement est supérieur ou égal à 120 °C et l'émulsion étant préparée essentiellement sans solvants hydrocarbures aromatiques, ladite feuille adhésive sensible à la pression répondant aux conditions (a) et (b) suivantes :
(a) lors d'un chauffage à 80 °C durant 30 minutes, l'émission de toluène est d'au plus 20 µg pour 1 g de feuille ;
(b) lors d'un chauffage à 80 °C durant 30 minutes, l'émission totale de composés organiques volatiles est d'au plus 150 µg pour 1 g de feuille.

2. Feuille adhésive sensible à la pression selon la revendication 1, dans laquelle l'émulsion de résine adhésive est préparée essentiellement sans solvants organiques.

3. Procédé de production d'une feuille adhésive sensible à la pression selon la revendication 1 ou 2, comprenant les étapes suivantes :
soumission d'un matériau monomère composé principalement d'un alkyl(méth)acrylate à une polymérisation en émulsion pour préparer une émulsion aqueuse de polymère acrylique ;
mélange de l'émulsion de polymère acrylique et d'une émulsion aqueuse de résine adhésive, ladite émulsion aqueuse de résine adhésive étant une émulsion aqueuse d'une résine adhésive dont le point de ramollissement est supérieur ou égal à 120 °C et l'émulsion étant préparée essentiellement sans solvants hydrocarbures aromatiques, pour préparer une composition adhésive sensible à la pression ; et
séchage de la composition adhésive sensible à la pression pour former une couche adhésive sensible à la pression ;
dans lequel la polymérisation en émulsion est mise en oeuvre sous les conditions suivantes :
le matériau monomère est ajouté à une cuve de réaction contenant une première fraction d'amorceur de polymérisation pour former un mélange de réaction, le mélange de réaction est maintenu à une température supérieure à la température ambiante pour effectuer la polymérisation en émulsion, une deuxième fraction d'amorceur de polymérisation est fournie au mélange de réaction après un intervalle de temps (10 minutes à 4 heures) depuis la fin de l'addition du matériau monomère à la cuve de réaction, et le mélange de réaction est refroidi depuis la température de polymérisation jusqu'à température ambiante.

4. Procédé selon la revendication 3, dans lequel est utilisé, pour la deuxième fraction, un amorceur de polymérisation ayant une température de demi-vie inférieure à celle de l'amorceur de polymérisation de la première fraction.

5. Procédé selon la revendication 3, dans lequel un amorceur d'oxydoréduction est utilisé pour la deuxième fraction.

6. Procédé selon la revendication 5, dans lequel l'amorceur d'oxydoréduction est une combinaison de peroxyde d'hydrogène et d'acide ascorbique.

7. Procédé selon l'une quelconque des revendications 3 à 6, dans lequel la composition adhésive sensible à la pression est séchée à une température inférieure ou égale à 110 °C.
